# EUROPÄISCHE PATENTSCHRIFT

(11) **EP 1 987 798 B1**
(45) Veröffentlichungstag und Bekanntmachung des Hinweises auf die Patenterteilung: **22.09.2010**
(21) Anmeldenummer: 08007870.2
(22) Anmeldetag: 23.04.2008
(51) Int. Cl.: A61C 3/02

(54) **Zahnfleischbearbeitungsinstrument**
Gum treatment instrument
Instrument de traitement de la gencive

(30) Priorität: 04.05.2007 DE 202007006415 U
(43) Veröffentlichungstag der Anmeldung: 05.11.2008
(73) Patentinhaber: Gebr. Brasseler GmbH & Co. KG, 32657 Lemgo (DE)
(72) Erfinder: Küllmer, Michael, 32657 Lemgo (DE)
(74) Vertreter: Weber, Joachim

(56) Entgegenhaltungen:
- WO-A-02/09598
- DE-A1- 19 810 284
- DE-U1- 20 314 717
- DE-U1-202006 018 407
- US-A1- 2002 028 422
- US-B1- 6 368 336

## Beschreibung

Die Erfindung bezieht sich auf ein Zahnfleischbearbeitungsinstrument, das auch als Tissue Trimmer bezeichnet wird.

Zahnfleischbearbeitungsinstrumente werden eingesetzt, um mit sehr hohen Drehzahlen von beispielsweise 300.000 bis 500.000 min⁻¹ zu arbeiten. Dabei kann mittels derartiger Zahnfleischbearbeitungsinstrumente eine Gingivamodellation ebenso durchgeführt werden, wie Gingivaschnitte, eine Erweiterung des Sulkus für Abdrücke, eine Freilegung von tiefen Zahnhalskavitäten, eine Papillenektomie oder eine Freilegung von intraossalen Implantaten sowie von retinierten Zähnen.

Die US 6 368 336 B1 beschreibt einen keramischen Gingiva-Trimmer, welcher zweiteilig ausgebildet ist. An einem metallischen Schaft ist ein rohrförmiges Verbindungsstück befestigt, in welchem eine Keramikspitze aufgenommen ist. Derartige Ausgestaltungen erweisen sich als aufwendig in der Herstellung und weisen zudem einen relativ großen Durchmesser auf, welcher bei der Arbeit nachteilig ist.

Der Erfindung liegt die Aufgabe zugrunde, ein Zahnfleischbearbeitungsinstrument der eingangs genannten Art zu schaffen, welches bei einfachem Aufbau, einfacher und betriebssicherer Anwendbarkeit und günstigen Herstellungskosten universell einsetzbar ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit ein einstückiges Zahnfleischbearbeitungsinstrument geschaffen, welches kostengünstig aus einem keramischen Werkstoff herstellbar ist. Durch die Einstückigkeit ergeben sich besonders vorteilhafte Herstellungskosten. Weiterhin ergeben sich durch die Einstückigkeit keine Spalten oder Fugen, die einer speziellen Aufmerksamkeit bei der Sterilisation oder Desinfektion des erfindungsgemäßen Instruments bedürften.

Insbesondere im Hinblick auf die Verwendung von keramischen Werkstoffen ergeben sich bei der erfindungsgemäßen einstückigen Ausgestaltung Vorteile hinsichtlich der Dimensionierbarkeit und der Handhabung. Die Einspannung des Schaftendes kann in üblicher Weise durch Klemmung erfolgen, so dass das erfindungsgemäße Instrument mit bekannten Antriebsmitteln kompatibel ist.

Das erfindungsgemäße Instrument stellt somit zur Zahnfleischbehandlung eine Alternative und Ergänzung zur Elektrochirurgie und zum Skalpell dar. Dabei bewirkt der erfindungsgemäß verwendete keramische Werkstoff eine Koagulation der Gefäße und reduziert somit die Blutungsneigung.

Durch die hohe Stabilität, die das einstückige erfindungsgemäße keramische Instrument aufweist, wird ein sicheres und schnelles Bearbeiten des Zahnfleisches ermöglicht.

In günstiger Weise ist erfindungsgemäß vorgesehen, dass der Spitzenbereich in Form eines glatten, kegelförmigen Bereichs ausgebildet ist. Es sind somit erfindungsgemäß keine Schneiden oder Oberflächen-Strukturierungen erforderlich.

Erfindungsgemäß kann entweder ein einziger kegelförmiger Bereich oder die Abfolge zweier kegelförmiger Bereiche vorgesehen sein. Der Kegelwinkel kann zwischen 5° und 30° betragen, bevorzugterweise liegt dieser für einen größeren Kegel bei 14° und für einen kleineren, axial kürzeren Kegel bei 30°.

Besonders günstig ist es, dass der Spitzenbereich distal abgeplattet ist, wobei die Abplattung in einem Durchmesserbereich von 0,05 bis 0,2 mm liegt, welche senkrecht zur Drehachse des Instruments liegt.

Erfindungsgemäß ist es besonders günstig, wenn der keramische Werkstoff eine Biegefestigkeit von > 1900 MPA aufweist.

Der keramische Werkstoff kann beispielsweise aus Rein-Zirkonoxid oder aus einer Mischerkeramik gefertigt sein, welche beispielsweise aus Zirkonoxid und Aluminiumoxid besteht.

Im Folgenden wird die Erfindung anhand eines Ausführungsbeispiels in Verbindung mit der Zeichnung beschrieben. Dabei zeigt:

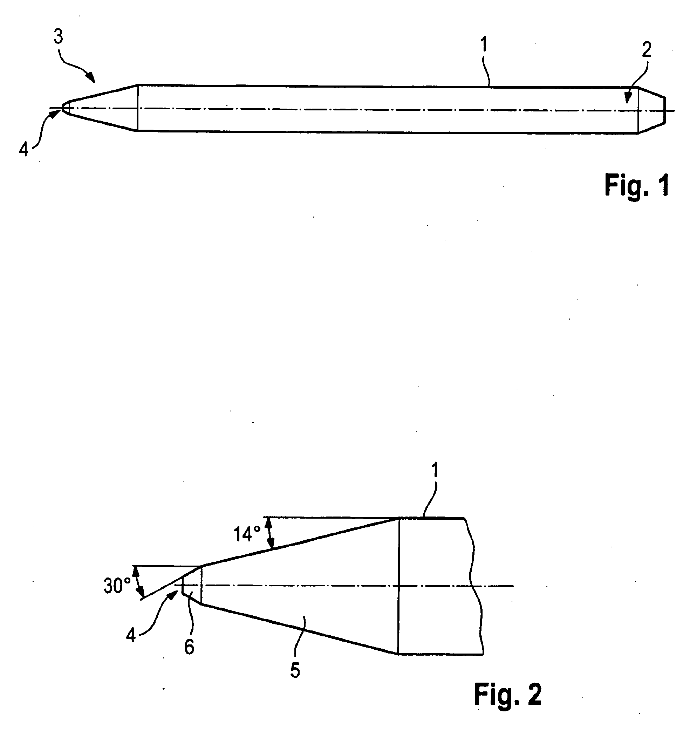

Fig. 1 eine schematische Seitenansicht eines Ausführungsbeispiels des erfindungsgemäßen Zahnfleischbearbeitungsinstruments, und
Fig. 2 eine Detailansicht der Einzelheit Z gemäß Fig. 1.

Das erfindungsgemäße Instrument umfasst einen zylindrischen Grundkörper 1, welcher aus einem keramischen Werkstoff hergestellt ist. Einstückig sind dabei ein Einspannbereich 2 (Schaftende) sowie ein Spitzenbereich 3 vorgesehen. Der Spitzenbereich 3 umfasst einen ersten Kegel 5 sowie einen zweiten Kegel 6. Der erste Kegel 5 ist mit einem Winkel von 14° versehen. Der zweite Kegel 6 weist einen Kegelwinkel von 30 auf. Die Länge des ersten Kegels 5 und des zweiten Kegels 6 beträgt zusammen ca. 2,5 mm bei einer Gesamtlänge des erfindungsgemäßen Instruments von 20 mm und einem Durchmesser des Grundkörpers von 1,6 mm. Es versteht sich, dass die Maßangaben nur beispielhafte Werte sind.

Der Spitzenbereich 3 weist an seinem distalen Ende eine Abplattung 4 auf, welche beispielsweise einen Durchmesser von 0,2 mm aufweist.

### Bezugszeichenliste

- 1: Grundkörper
- 2: Einspannbereich
- 3: Spitzenbereich
- 4: Abplattung
- 5, 6: Kegelförmige Bereiche

## Patentansprüche

1. Zahnfleischbearbeitungsinstrument mit einem im Wesentlichen zylindrischen Grundkörper (1) aus einem keramischen Werkstoff, welcher einen Einspannbereich (2) und einen Spitzenbereich (3) umfasst, wobei der Spitzenbereich (3) kegelförmig ausgebildet ist, **dadurch gekennzeichnet, dass** der Einspannbereich (2) und der Spitzenbereich (3) einstückig ausgebildet sind, dass der Spitzenbereich (3) in Form eines glatten kegelförmigen Bereichs ausgebildet ist und dass der Spitzenbereich (3) distal abgeplattet ist und dass die Abplattung (4) einen Durchmesser von 0,05 bis 0,2 mm aufweist.

2. Zahnfleischbearbeitungsinstrument nach Anspruch 1, **dadurch gekennzeichnet, dass** der Spitzenbereich zwei kegelförmige Bereiche (5, 6) umfasst.

3. Zahnfleischbearbeitungsinstrument nach einem der Ansprüche 1 bis 2, **dadurch gekennzeichnet, dass** der Kegelwinkel zwischen 5° und 30° beträgt.

4. Zahnfleischbearbeitungsinstrument nach Anspruch 3, **dadurch gekennzeichnet, dass** der Kegelwinkel 14° beträgt.

5. Zahnfleischbearbeitungsinstrument nach Anspruch 3, **dadurch gekennzeichnet, dass** der Kegelwinkel 30° beträgt.

6. Zahnfleischbearbeitungsinstrument nach einem der Ansprüche 1 bis 5, **dadurch gekennzeichnet, dass** dieses aus einem keramischen Werkstoff mit einer Biegefestigkeit von > 1900 MPA gefertigt ist.

7. Zahnfleischbearbeitungsinstrument nach einem der Ansprüche 1 bis 6, **dadurch gekennzeichnet, dass** der Keramikwerkstoff aus einer Mischkeramik aus Zirkonoxid und Aluminiumoxid besteht.

8. Zahnfleischbearbeitungsinstrument nach einem der Ansprüche 1 bis 6, **dadurch gekennzeichnet, dass** der Keramikwerkstoff aus Zirkonoxid besteht.

## Claims

1. A gum treatment instrument comprising a substantially cylindrical base body (1) made of a ceramic material, which comprises a clamping portion (2) and a tip portion (3), the tip portion (3) being formed conically, **characterized in that** the clamping portion (2) and the tip portion (3) are formed integrally, that the tip portion (3) is formed as a smooth conical portion and that the tip portion (3) is flattened on the distal side and that the flattened portion (4) has a diameter of 0.05 to 0.2 mm.

2. The gum treatment instrument of claim 1, **characterized in that** the tip portion comprises two conical portions (5, 6).

3. The gum treatment instrument of one of claims 1 to 2, **characterized in that** the cone angle ranges between 5° and 30°.

4. The gum treatment instrument of claim 3, **characterized in that** the cone angle is 14°.

5. The gum treatment instrument of claim 3, **characterized in that** the cone angle is 30°.

6. The gum treatment instrument of one of claims 1 to 5, **characterized in that** same is made of a ceramic material having a bending strength of > 1900 MPA.

7. The gum treatment instrument of one of claims 1 to 6, **characterized in that** the ceramic material consists of a mixed ceramic made of zirconium oxide and aluminium oxide.

8. The gum treatment instrument of one of claims 1 to 6, **characterized in that** the ceramic material consists of zirconium oxide.

## Revendications

1. Instrument de traitement de la gencive avec un corps de base (1) essentiellement cylindrique en un matériau céramique, lequel comporte une zone de fixation (2) et une zone en pointe (3), la zone en pointe (3) étant réalisée de manière conique, **caractérisé en ce que** la zone de fixation (2) et la zone en pointe (3) sont réalisées d'un seul tenant, **en ce que** la zone en pointe (3) est réalisée sous la forme d'une zone conique lisse, et **en ce que** la zone en pointe (3) est distalement aplatie, et **en ce que** l'aplatissement (4) a un diamètre compris entre 0,05 et 0,2 mm.

2. Instrument de traitement de la gencive selon la revendication 1, **caractérisé en ce que** la zone en pointe comporte deux zones coniques (5, 6).

3. Instrument de traitement de la gencive selon l'une quelconque des revendications 1 à 2, **caractérisé en ce que** l'angle de cône est compris entre 5° et 30°.

4. Instrument de traitement de la gencive selon la revendication 3, **caractérisé en ce que** l'angle de cône est égal à 14°.

5. Instrument de traitement de la gencive selon la revendication 3, **caractérisé en ce que** l'angle de cône est égal à 30°.

6. Instrument de traitement de la gencive selon l'une quelconque des revendications 1 à 5, **caractérisé en ce que** celui-ci est réalisé en matériau céramique ayant une résistance à la flexion de > 1900 MPA.

7. Instrument de traitement de la gencive selon l'une quelconque des revendications 1 à 6, **caractérisé en ce que** le matériau céramique est une céramique mixte constituée d'oxyde de zirconium et d'oxyde d'aluminium.

8. Instrument de traitement de la gencive selon l'une quelconque des revendications 1 à 6, **caractérisé en ce que** le matériau céramique est en oxyde de zirconium.
